# EUROPÄISCHE PATENTSCHRIFT

(11) **EP 3 066 366 B1**
(45) Veröffentlichungstag und Bekanntmachung des Hinweises auf die Patenterteilung: **02.09.2020**
(21) Anmeldenummer: 14792389.0
(22) Anmeldetag: 21.10.2014
(51) Int. Cl.: F16H 57/04

(54) **GETRIEBE MIT GEHÄUSE**
TRANSMISSION WITH HOUSING
MÉCANISME DE TRANSMISSION AVEC CARTER

(30) Priorität: 08.11.2013 DE 102013018713
(43) Veröffentlichungstag der Anmeldung: 14.09.2016
(73) Patentinhaber: SEW-EURODRIVE GmbH & Co. KG, 76646 Bruchsal (DE)
(72) Erfinder: WU, Zili, Tianjin 300060 (CN)
(86) Internationale Anmeldenummer: PCT/EP2014/002831
(87) Internationale Veröffentlichungsnummer: WO 2015/067344

(56) Entgegenhaltungen:
- WO-A1-2010/009871
- DE-A1-102008 004 337
- JP-A- 2009 150 502

## Beschreibung

Die Erfindung betrifft ein Getriebe mit Gehäuse.

Es ist allgemein bekannt, dass ein Gehäuse eines Getriebes Lageraufnahmen aufweist, in denen die Lager der Wellen des Getriebes aufnehmbar sind und die entsprechenden Kräfte abgeleitet werden.

Aus der DE 10 2008 004337 A1 ist als nächstliegender Stand der Technik ein Gehäuse für ein Getriebe bekannt.

Aus der WO 2010/009871 A1 ist ein Getriebe mit einer berührungslosen Dichtung für eine vertikal herausragende Welle des Getriebes gezeigt.

Aus der JP 2009 150502 A ist ein Öl-Management bei einem Fahrzeug bekannt.

Der Erfindung liegt daher die Aufgabe zugrunde, die Umwelt zu schonen, insbesondere die Ressourcen zu schonen.

Erfindungsgemäß wird die Aufgabe bei dem Gehäuse für ein Getriebe nach den in Anspruch 1 angegebenen Merkmalen gelöst.

Wichtige Merkmale der Erfindung bei dem Getriebe mit Gehäuse sind, dass das Gehäuse ein Gehäuseoberteil und ein Gehäuseunterteil aufweist,
wobei das Gehäuse ein Gehäuseoberteil und ein Gehäuseunterteil aufweist, auf das das Gehäuseoberteil aufgesetzt ist, wobei das Gehäuseoberteil auf einer ersten Seite einer Ebene und das Gehäuseunterteil auf der anderen Seite der Ebene angeordnet ist,
wobei das Gehäuseoberteil schalenförmig ausgeformt ist,
wobei das Gehäuseoberteil eine den Innenraum des Getriebes zumindest teilweise begrenzende Deckenwandung aufweist, dadurch gekennzeichnet, dass an der Deckenwandung zumindest eine Ölleitrippenstruktur angeordnet ist, insbesondere als Erhebung oder Vertiefung ausgeformt ist,
wobei ein Rippenabschnitt der jeweiligen Ölleitrippenstruktur von einem Bereich der Deckenwandung mit betragsmäßig geringer oder verschwindender Neigung gegen die Ebene, insbesondere Horizontaleben, zu einem Bereich der Deckenwandung mit betragsmäßig größerer Neigung gegen die Ebene sich erstreckt.

Von Vorteil ist dabei, dass das an die Deckenwandung hochgespritzte Öl von der Ölleitrippenstruktur zu seitlich angeordneten Rinnen leitbar ist. Dabei ist das Öl entlang der Deckenwandung von der Ölleitrippe geführt zur seitlich angeordneten Rinne.

Bei einer vorteilhaften Ausgestaltung weist die jeweilige Ölleitrippenstruktur zwei oder mehr Rippenabschnitte auf, die in einen Sammelrippenabschnitt münden. Von Vorteil ist dabei, dass die Ölleitstruktur materialsparend ausführbar ist.

Bei einer vorteilhaften Ausgestaltung weist das Gehäuseoberteil eine den Innenraum des Getriebes zumindest teilweise begrenzende, derart in Längsrichtung und derart in Querrichtung gekrümmte, insbesondere konkave, Deckenwandung auf, dass zur Deckenwandung hochgespritzte Öltröpfchen in oder entgegen der Querrichtung entlang der Deckenwandung abtropfen in eine an der Innenseite des Gehäuseoberteils ausgeformte Rinne,
insbesondere wobei der Betrag der Steigung, insbesondere also die Neigung der Deckenwandung gegenüber der horizontalen Richtung, der Deckenwandung in Querrichtung mit zunehmendem Abstand vom höchsten Punkt der Deckenwandung, insbesondere vom Punkt der Deckenwandung mit verschwindender Steigung, schneller zunimmt als in Längsrichtung. Von Vorteil ist dabei, dass die Neigung und die Neigungsänderung in Querrichtung derart ausführbar ist, dass Öltröpfchen nicht abtropfen sondern entlang der Ölleitrippenstruktur abfließen.

Bei einer vorteilhaften Ausgestaltung weist das Gehäuseoberteil an seiner Innenseite eine am Gehäuseoberteil ausgeformte Rinne, insbesondere einstückig, also einteilig, ausgeformte Rinne auf,
insbesondere wobei der Betrag der Steigung der Deckenwandung, insbesondere also die Neigung der Deckenwandung gegenüber der horizontalen Richtung, in Querrichtung mit zunehmendem Abstand vom höchsten Oberflächenpunkt der Deckenwandung, insbesondere also vom Oberflächenpunkt der Deckenwandung mit verschwindender Steigung, schneller zunimmt als in Längsrichtung. Von Vorteil ist dabei, dass eine Rinne als Sammeltasche für Öl am Gehäuseoberteil ausgebildet ist und somit von dort das in Querrichtung geförderte Öl sammelbar ist und den zu schmierenden Lagerstellen zuführbar ist.

Bei einer vorteilhaften Ausgestaltung führt der Sammelrippenabschnitt Öl der Rinne zu,
insbesondere wobei der Sammelrippenabschnitt der Ölleitrippenstruktur von einem Bereich der Deckenwandung mit einem ersten Betrag an Neigung gegen die Ebene, insbesondere Horizontaleben, zu einem Bereich der Deckenwandung mit einem zweiten Betrag an Neigung gegen die Ebene sich erstreckt,
wobei der zweite Betrag größer ist als der erste Betrag. Von Vorteil ist dabei, dass das Leiten des Öls in einfacher Weise ermöglicht ist und dabei die Neigung derart wählbar ist, dass das Öl an der Deckenwandung entlang, also ohne abzutropfen, führbar ist.

Bei einer vorteilhaften Ausgestaltung weist die Deckenwandung mehrere Ölleitstrukturen auf. Von Vorteil ist dabei, dass ein möglichst großer Anteil des an die Deckenwandung heraufspritzenden Öls zur Rinne hin ableitbar ist.

Bei einer vorteilhaften Ausgestaltung ist die jeweilige Ölleitstruktur als separates Teil gefertigt und mit dem Gehäuseoberteil verbunden. Von Vorteil ist dabei, dass eine einfache Herstellung durch Ausbilden der Ölleitstruktur in der Gussform erreichbar ist.

Bei einer vorteilhaften Ausgestaltung ist das Gehäuseoberteil schalenförmig ausgeformt, insbesondere halbnussschalenförmig,
wobei das Gehäuseoberteil eine den Innenraum des Getriebes zumindest teilweise begrenzende, derart in Längsrichtung und derart in Querrichtung gekrümmte, insbesondere konkave, Deckenwandung aufweist, dass zur Deckenwandung hochgespritzte Öltröpfchen in oder entgegen der Querrichtung entlang der Deckenwandung abtropfen in eine an der Innenseite des Gehäuseoberteils ausgeformte Rinne,
insbesondere wobei der Betrag der Steigung, insbesondere also die Neigung der Deckenwandung gegenüber der horizontalen Richtung, der Deckenwandung in Querrichtung mit zunehmendem Abstand vom höchsten Punkt der Deckenwandung, insbesondere vom Punkt der Deckenwandung mit verschwindender Steigung, schneller zunimmt als in Längsrichtung.

Von Vorteil ist dabei, dass die Deckenwandung derart geneigt ausgeführt ist, dass von einem Verzahnungsteil, wie Zahnrad, zur Deckenwandung heraufgespritzte Öltröpfchen zu einer Rinne im Gehäuseoberteil abgeleitet werden und von dort zu schmierende Teile mit Schmieröl beschickbar sind.

Wichtige Merkmale der Erfindung bei dem Getriebe mit Gehäuse sind, dass das Gehäuse ein Gehäuseoberteil und ein Gehäuseunterteil aufweist,
insbesondere wobei das Gehäuseoberteil schalenförmig ausgeformt ist, insbesondere halbnussschalenförmig,
wobei das Gehäuseoberteil eine den Innenraum des Getriebes zumindest teilweise begrenzende, in Längsrichtung und in Querrichtung gekrümmte, insbesondere konkave, Deckenwandung aufweist,
das Gehäuseoberteil an seiner Innenseite eine am Gehäuseoberteil ausgeformte Rinne, insbesondere einstückig, also einteilig, ausgeformte Rinne aufweist,
wobei der Betrag der Steigung der Deckenwandung, insbesondere also die Neigung der Deckenwandung gegenüber der horizontalen Richtung, in Querrichtung mit zunehmendem Abstand vom höchsten Oberflächenpunkt der Deckenwandung, insbesondere also vom Oberflächenpunkt der Deckenwandung mit verschwindender Steigung, schneller zunimmt als in Längsrichtung,

Von Vorteil ist dabei, dass die Deckenwandung derart geneigt ausgeführt ist, dass von einem Verzahnungsteil, wie Zahnrad, zur Deckenwandung heraufgespritzte Öltröpfchen zu einer Rinne im Gehäuseoberteil abgeleitet werden und von dort zu schmierende Teile mit Schmieröl beschickbar sind. Bevorzugt werden die Öltröpfchen entlang der Deckenwandung in oder entgegen der Querrichtung gefördert, so dass die in und oder entgegen der Querrichtung angeordneten Rinnen beschickt werden mit Öl.

Bei einer vorteilhaften Ausgestaltung ist die Querrichtung parallel zur Wellenachse der abtreibenden Welle ausgerichtet,
wobei die Längsrichtung senkrecht und/oder transversal zur Querrichtung ausgerichtet ist, insbesondere wobei die Längsrichtung parallel zu der von einer Wellenachse einer Zwischenwelle und von einer Wellenachse einer abtreibenden Welle aufgespannten Ebene ausgerichtet ist.

Bei einer vorteilhaften Ausgestaltung ist die Deckenwandung einem Gewölbe entsprechend ausgeformt. Von Vorteil ist dabei, dass die heraufspritzenden Öltröpfchen entlang des Gewölbes abgeleitet werden, um dann an der Seite heruntergeleitet zu werden in eine an der Innenseite ausgeformte Rinne.

Bei einer vorteilhaften Ausgestaltung wird aus der Rinne Schmieröl zu schmierenden Teilen, wie Lager und/oder Verzahnungsteil, zugeführt wird. Von Vorteil ist dabei, dass mittels des Heraufspritzens von Öl an die Deckenwandung das Öl in die Rinne gefördert wird. Zusätzlich ist mittels der Pumpwirkung des mit der Wanne zusammenwirkenden Zahnrads Schmieröl in die rinne beförderbar, so dass genügend Öl für die Schmierung der zu schmierenden Teile, wie Lager oder im Eingriff stehende Verzahnungsteile, zur Verfügung steht.

Bei einer vorteilhaften Ausgestaltung umgibt eine Wanne zur Ölführung und Verminderung von Plantschverlusten einen Umfangsabschnitt eines Verzahnungsteils, insbesondere Zahnrades, insbesondere in radialer und in axialer Richtung,
wobei die Wanne zumindest aus drei Teilen, also zumindest aus einer Bodenplatte und zwei Seitenwänden, zusammengesetzt ist, wobei die Bodenplatte mit den beiden Seitenwänden schraubverbunden ist,
wobei die Wanne am Gehäuse befestigt ist,
wobei die Wanne eine Ausnehmung, insbesondere einen Kanal, aufweist, insbesondere an ihrem tiefsten Oberflächenbereich, insbesondere also an dem den größten Radialabstand aufweisenden Oberflächenbereich,
insbesondere wobei bei Drehbewegung des Zahnrades Öl aus dem Ölsumpf des Getriebes durch die Ausnehmung hindurch zwischen Wanne und Zahnrad gefördert wird, insbesondere auf eine höhere Position als der Pegel des Ölsumpfes,
wobei Bodenplatte und die Seitenwände Stanz-Biegeteile sind.

Von Vorteil ist dabei, dass mittels des Zahnrads Öl aus dem Ölsumpf des Getriebes an eine höher gelegene Stelle, wie beispielsweise ein Zwischenspeicher oder eine Sammelrinne, förderbar ist und somit von dort Lager und in Eingriff stehende Verzahnungen schmierbar sind mit Schmieröl. Außerdem sind mittels der Wanne, welche zumindest abschnittsweise der Kontur des Zahnrads, also der Einhüllenden des drehenden Zahnrads, also dem zylindrischen Raumberiech, welcher durch das drehende Zahnrad berührt ist, entsprechend folgt, Plantschverluste verminderbar. Hierzu ist der Spalt zwischen dem drehenden Zahnrad und der Wanne, insbesondere der Bodenplatte der Wanne gering auszuführen. Die Bodenplatte ist mit ihrem dem Zahnrad zugewandten Oberflächenabschnitt auf einem Radialabstand angeordnet, der nur gering beabstandet ist von dem Radialabstand der Köpfe der Verzahnung des Zahnrades zur Achse des Zahnrades. #Somit erstreckt sich der dem Zahnrad zugewandte Oberflächenabschnitt der Bodenplatte im Wesentlichen in Umfangsrichtung und in axialer Richtung, weist aber mit Ausnahme einer Ausnehmung stets denselben Radialabstand zur Achse des Zahnrades, insbesondere zur Achse derjenigen Welle, mit welcher das Zahnrad drehfest verbunden ist.

Die Ausführung der Wanne aus nur drei die Wanne bildenden Teilen, nämlich Bodenplatte und Seitenwänden, ermöglicht eine besonders kostengünstige Herstellung durch Schraubverbinden dieser Teile.

Bei einer vorteilhaften Ausgestaltung ist der Abstand, insbesondere der in radialer Richtung bestehende Abstand, zwischen der Bodenplatte und den Köpfen der Verzahnung im von der Wanne überdeckten Umfangswinkelbereich konstant. Von Vorteil ist dabei, dass ein geringer Spalt als Abstand genügt, um die Pumpwirkung auszuführen. Somit sind die Plantschverluste verringerbar.

Bei einer vorteilhaften Ausgestaltung weist die Bodenplatte in radialer Richtung sich erstreckende Laschenabschnitte auf, an welchen die Seitenwände mittels Schraubverbindung schraubverbunden sind. Von Vorteil ist dabei, dass die Laschenabschnitt in einfacher Weise herstellbar sind durch Biegen eines Stanzblechs. Außerdem ist der Laschenabschnitt parallel ausrichtbar zur Seitenwand, also senkrecht zum in Umfangsrichtung und in axialer Richtung sich erstreckendem Oberflächenabschnitt der Bodenplatte. Somit ist eine einfache stabile Verbindung zwischen Bodenplatte und Seitenwand erzielbar. Bei einer Getriebebaureihe, bei welcher verschieden große Zahnräder zum Einsatz gelangen, da für jedes Getriebe der Getriebebaureihe eine jeweils verschiedene Übersetzungszahl ausführbar ist. Somit ist aber die Bodenplatte auf jeweils angepasstem Radialabstand zu befestigen und somit die axial ausgerichteten Schrauben der Schraubverbindung zwischen Bodenplatte und Seitenwand entsprechend auf verschiedenem Radialabstand.

Bei einer vorteilhaften Ausgestaltung weist eine Seitenwand eine Kennzeichnung auf, an der ein Bohrloch zum Durchführen einer Schraube der Schraubverbindung anbringbar ist. Von Vorteil ist dabei, dass je nach Übersetzungszahl des Getriebes oder Größe, insbesondere Kopfkreisdurchmesser, des Zahnrades ein Bohrloch auf dem jeweils unterschiedlichen gekennzeichneten Radialabstand anbringbar ist und somit die Wanne auf verschiedenem Radialabstand anordenbar ist.

Bei einer vorteilhaften Ausgestaltung ist die Ausnehmung, insbesondere der Kanal, begrenzt durch die Bodenplatte und die beiden Seitenwände. Von Vorteil ist dabei, dass eine Ölfördernde Ausnehmung in einfacher Weise und kostengünstig herstellbar ist.

Bei einer vorteilhaften Ausgestaltung ist die Bodenplatte und jede Seitenwand jeweils einstückig, also einteilig, ausgebildet. Von Vorteil ist dabei, dass jedes der drei Teile als Stanzbiegeteil herstellbar ist, also sehr einfach und kostengünstig. Dabei sind sogar die beiden Seitenwände gleichartig ausführbar.

Bei einer vorteilhaften Ausgestaltung ist das Gehäuse für ein Getriebe vorgesehen,
wobei das Gehäuse ein Gehäuseoberteil und ein Gehäuseunterteil aufweist,
wobei das Gehäuseoberteil einen rahmenartigen Tragabschnitt aufweist, an dem Wandabschnitte angeformt sind,
wobei der rahmenartige Tragabschnitt mit den Wandabschnitten einstückig, also einteilig, ausgeformt ist, insbesondere als Gussteil, insbesondere als Stahlgussteil.

Von Vorteil ist dabei, dass nur der Tragabschnitt viel Material, also auch Masse, enthalten muss, nicht aber die Wandabschnitte. Somit ist auf materialsparende Weise erreichbar, dass hohe Kräfte übertragen werden.

Bei einer vorteilhaften Ausgestaltung ist die größte Wandstärke der Wandabschnitte kleiner als die größte Wandstärke des Tragabschnitts. Von Vorteil ist dabei, dass die Wandabschnitte mit dünner Wandstärke ausführbar sind und somit das Gehäuse materialsparend ausführbar ist.

Bei einer vorteilhaften Ausgestaltung weist der rahmenartige Tragabschnitt des Gehäuseoberteils eine erste und eine zweite Querrippe auf, insbesondere wobei die Querrippen sich hauptsächlich in horizontaler Richtung erstrecken, insbesondere also in horizontaler Richtung weiter ausgedehnt sind als in jeder hierzu transversalen Richtung,
wobei der rahmenartige Tragabschnitt zwei erste Rippen aufweist,
wobei die zwei ersten Rippen voneinander beabstandet und sind und jeweils mit der ersten Querrippe verbunden sind, insbesondere an zwei voneinander beabstandeten Stellen,
insbesondere wobei die ersten Rippen sich hauptsächlich in vertikaler Richtung erstrecken, insbesondere also in vertikaler Richtung weiter ausgedehnt sind als in jeder hierzu transversalen Richtung,
wobei die zwei zweiten Rippen voneinander beabstandet sind und jeweils mit der zweiten Querrippe verbunden sind, insbesondere an zwei voneinander beabstandeten Stellen,
insbesondere wobei die zweiten Rippen sich hauptsächlich in vertikaler Richtung erstrecken, insbesondere also in vertikaler Richtung weiter ausgedehnt sind als in jeder hierzu transversalen Richtung. Von Vorteil ist dabei, dass eine besonders hohe Stabilität mit geringem Materialaufwand erreichbar ist. Denn der rahmenartige Tragabschnitt weist eine rechteckförmige Gestalt auf, bei der das Rechteck an seinen beiden gegenüberliegenden Seiten aus der Ebene des Rechtecks herausgebogen ist, so dass die abgebogenen Bereiche im Wesentlichen in zur Ebene senkrechten weiteren Ebenen angeordnet sind, die zueinander beabstandet und parallel sind.

Bei einer vorteilhaften Ausgestaltung weist jede erste Rippe und jede zweite Rippe an ihrem von der jeweiligen Querrippe abgewandten Endbereich eine Tragöse auf. Von Vorteil ist dabei, dass die beim Transport ins Gehäuse eingeleiteten Kräfte direkt in den rahmenartigen Tragabschnitt eingeleitet werden und nicht in Wandabschnitte mit dünner Wandstärke.

Bei einer vorteilhaften Ausgestaltung ist eine erste Rippe an ihrem Endbereich mit einem Balken, insbesondere Tragbalken, verbunden, der an seinem anderen Ende mit dem Endbereich einer zweiten Rippe verbunden ist,
wobei die andere Rippe an ihrem Endbereich mit einem Balken, insbesondere Tragbalken, verbunden ist, der wiederum an seinem anderen Ende mit dem Endbereich der anderen zweiten Rippe verbunden ist,
insbesondere wobei die beiden Balken parallel und voneinander beabstandet angeordnet sind. Von Vorteil ist dabei, dass eine hohe Stabilität mittels der Verstrebungen erreichbar ist.

Bei einer vorteilhaften Ausgestaltung ist eine Welle des Getriebes mittels eines Lagers im Gehäuse gelagert,
wobei ein erster Teil der Lageraufnahme im Gehäuseoberteil und ein zweiter Teil der Lageraufnahme im Gehäuseunterteil angeordnet ist,
wobei der erste Teil der Lageraufnahme als aufgedickter Abschnitt ausgeführt ist und mit demjenigen Bereich der Querrippen verbunden ist, an dem auch die jeweilige Rippe verbunden ist. Von Vorteil ist dabei, dass eine zusätzliche Verstrebung des rahmenartigen Tragabschnitts mittels der aufgedickten Bereiche vorgesehen ist.

Bei einer vorteilhaften Ausgestaltung verschließt ein Gehäusedeckel eine Öffnung des Gehäuseoberteils 1, welche von dem rahmenförmigen Tragabschnitt umfasst ist, insbesondere mit Abstand, insbesondere so dass der rahmenförmige Tragabschnitt die Öffnung nicht direkt berührt, sondern von der Öffnung beabstandet ist. Von Vorteil ist dabei, dass durch die Öffnung Getriebeteile inspizierbar sind und Wartungsarbeiten ausführbar sind. Dabei fließt auch kein Schmieröl aus dem Getriebe heraus, da die Öffnung an der Oberseite des Gehäuseoberteils angeordnet ist.

Wichtige Merkmale bei dem Getriebe sind, dass es mit einem Gehäuse vorgesehen ist, wobei
eine Welle des Getriebes mittels eines Lagers im Gehäuse gelagert ist,
wobei ein erster Teil der Lageraufnahme im Gehäuseoberteil und ein zweiter Teil der Lageraufnahme im Gehäuseunterteil angeordnet ist,
wobei der erste Teil der Lageraufnahme als aufgedickter Abschnitt ausgeführt ist und mit demjenigen Bereich der Querrippen verbunden ist, an dem auch die jeweilige Rippe verbunden ist.

Von Vorteil ist dabei, dass eine hohe Verdrehsteifigkeit und eine hohe mechanische Stabilität erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erfindungsgemäßes Getriebegehäuse für ein Getriebe in einer ersten Blickrichtung in Schrägansicht gezeigt, das aus einem Gehäuseoberteil 1 und einem Gehäuseunterteil 2 zusammengesetzt ist.

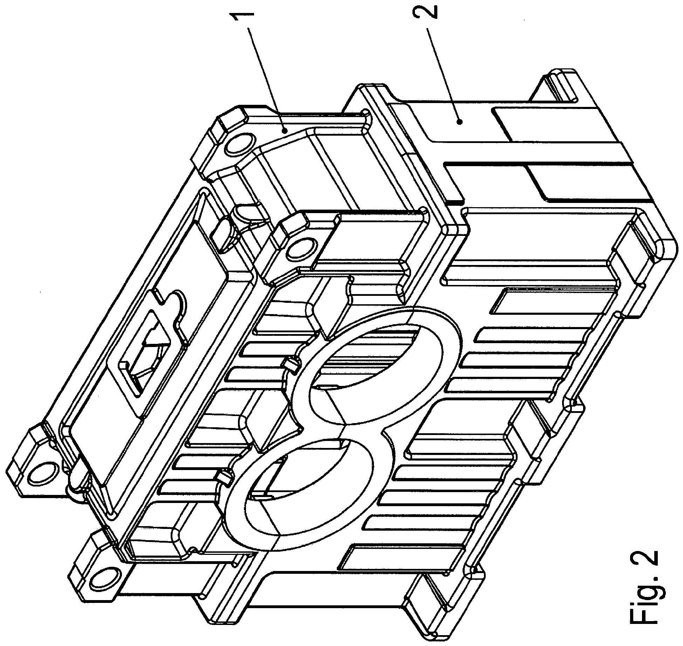

In der Figur 2 ist das erfindungsgemäße Getriebegehäuse in einer anderen Blickrichtung in Schrägansicht gezeigt.

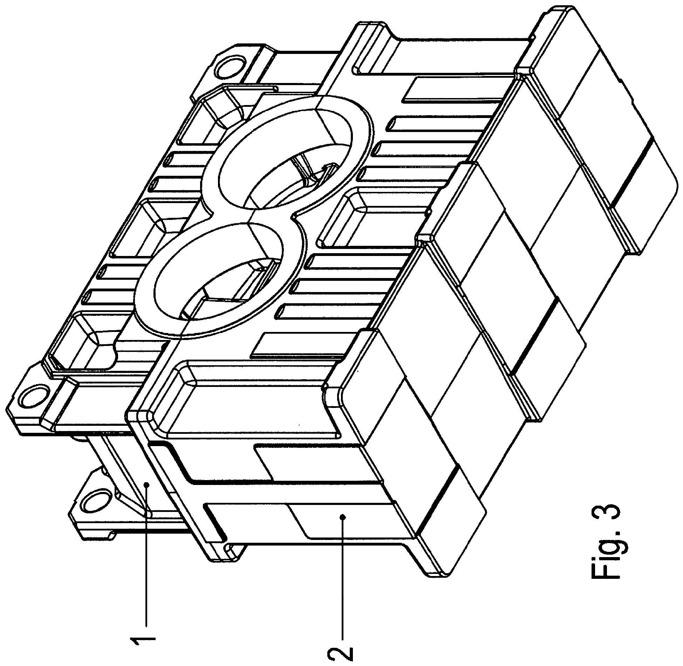

In der Figur 3 ist das erfindungsgemäße Getriebegehäuse in einer dritten Blickrichtung in Schrägansicht gezeigt.

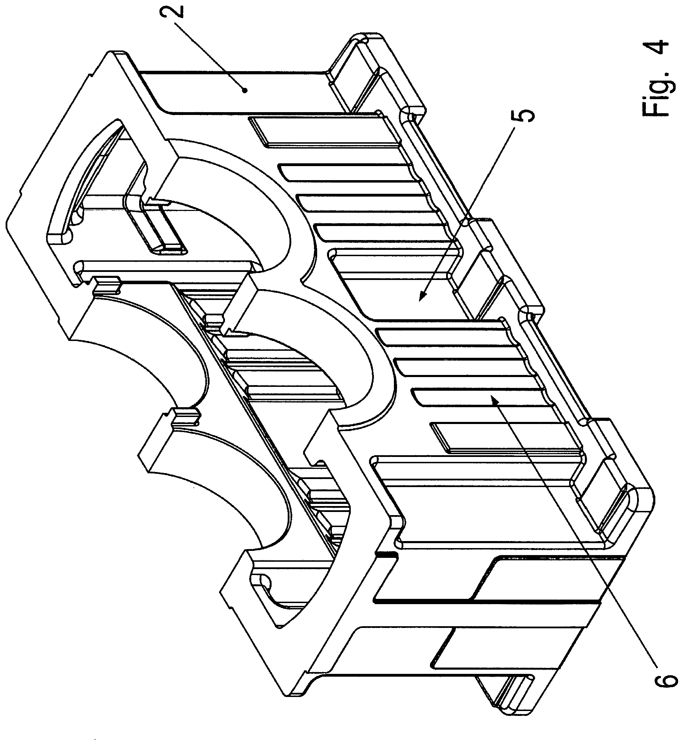

In der Figur 4 ist das Gehäuseunterteil 2 in Schrägansicht dargestellt.

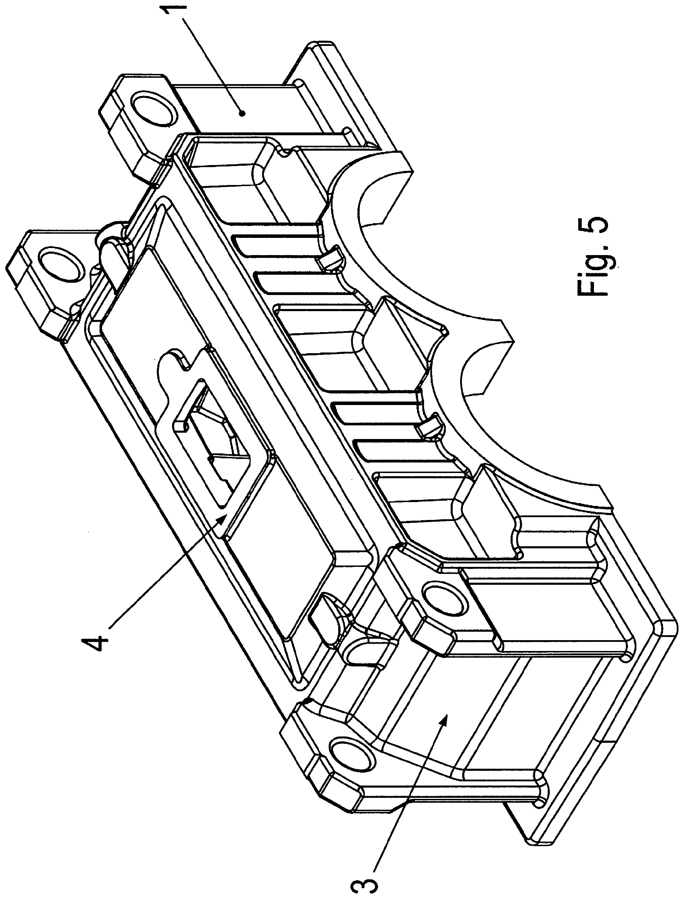

In der Figur 5 ist das Gehäuseoberteil 1 in Schrägansicht dargestellt.

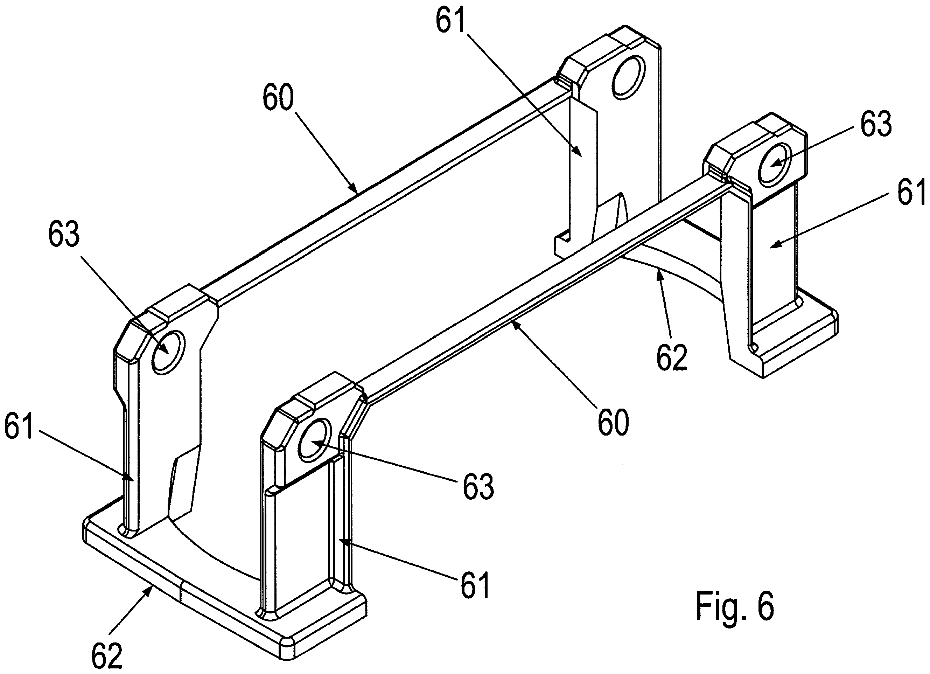

In der Figur 6 ist der rahmenartige Tragabschnitt des Gehäuseoberteils 1 dargestellt.

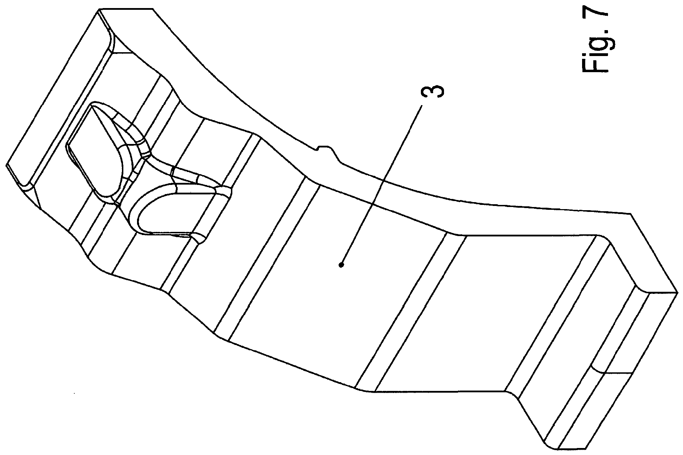

In der Figur 7 ist als Ausschnitt aus dem Gehäuseoberteil 1 ein Seitenwandabschnitt 3 gezeigt, welcher in den rahmenartigen Tragabschnitt eingefügt ist.

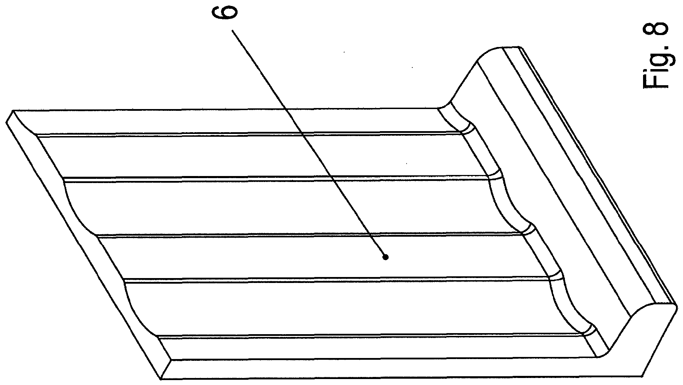

In der Figur 8 ist als Ausschnitt aus dem Gehäuseunterteil 2 ein Wandabschnitt mit Wellenstruktur gezeigt, insbesondere also einen konkav-konvex ausgebildetem Wandabschnitt.

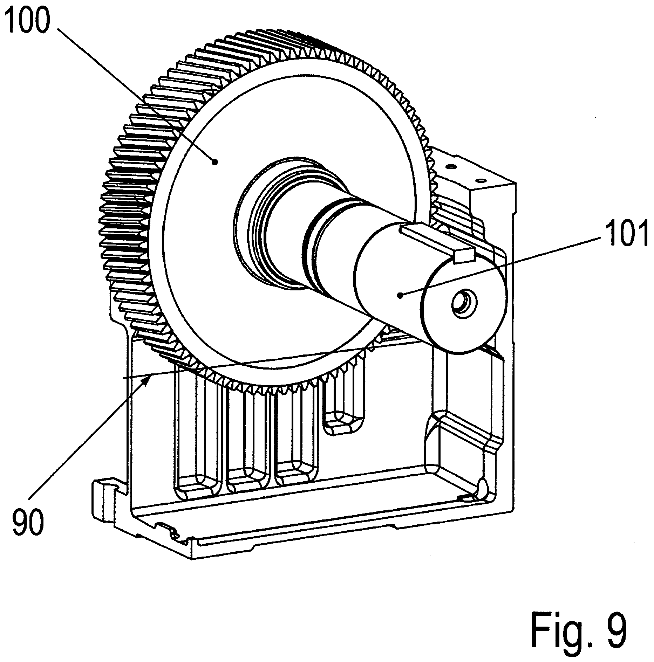

In der Figur 9 ist der Ölstand 90 dargestellt.
In der Figur 10 ist ein Zahnrad 100 des Getriebes gezeigt, das drehfest auf einer im Getriebegehäuse gelagerten Welle 101 angeordnet ist und von einer am Gehäuseunterteil 2 befestigten Wanne zumindest teilweise umgeben ist.

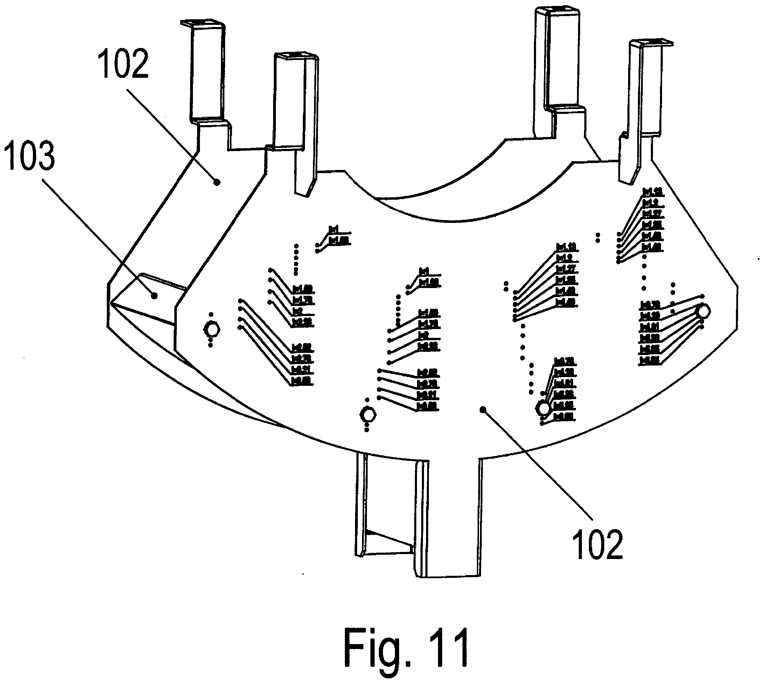

In der Figur 11 ist die Wanne selbst in Schrägansicht gezeigt, wobei die Wanne Seitenwände 102 und eine Bodenplatte 103 aufweist.
In der Figur 12 ist eine Seitenwand 102 der Wanne gezeigt.

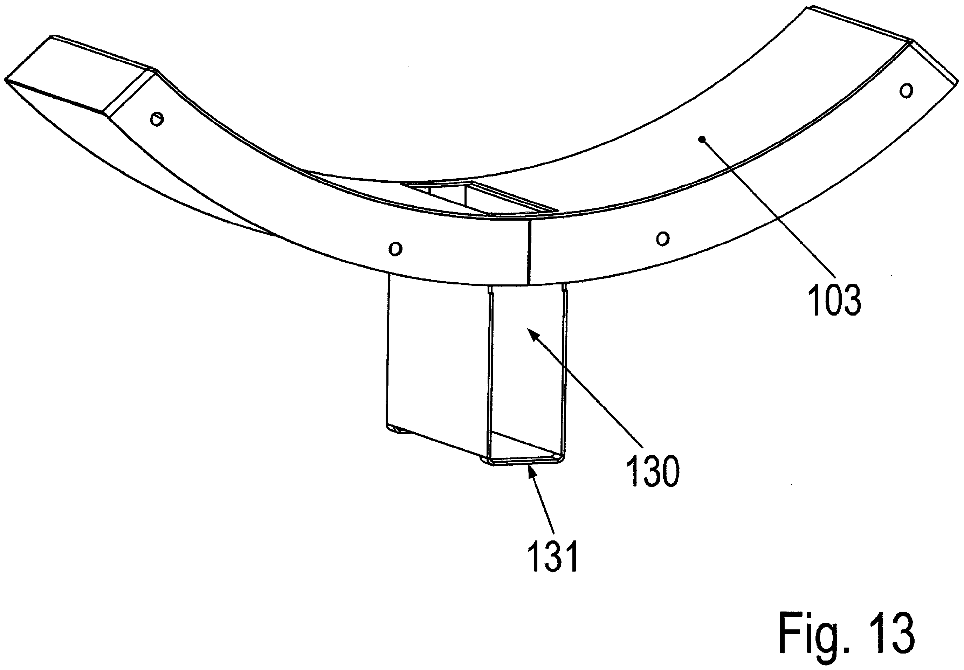

In der Figur 13 ist die Bodenplatte 103 der Wanne gezeigt.

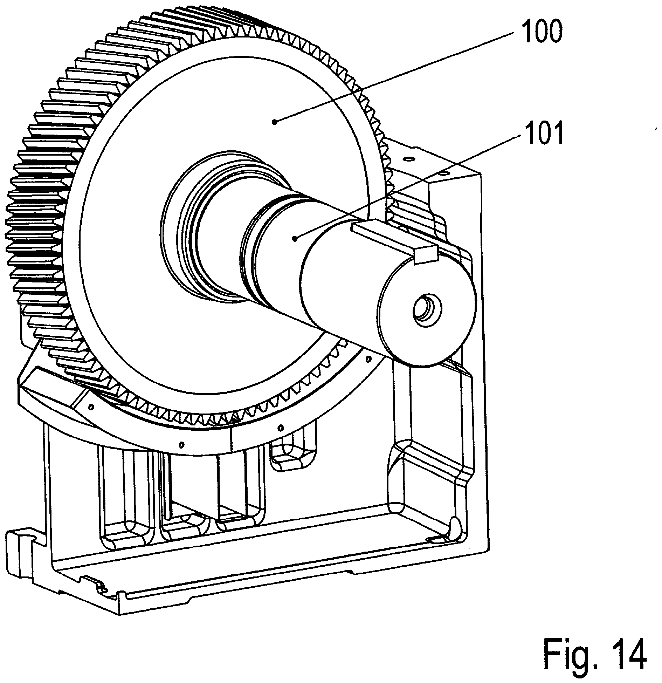

In der Figur 14 ist die Wanne ohne vordere Seitenwand 102 gezeigt, so dass das Zahnrad in Schrägansicht sichtbar ist, wobei ein erster Ausschnitt gekennzeichnet ist.

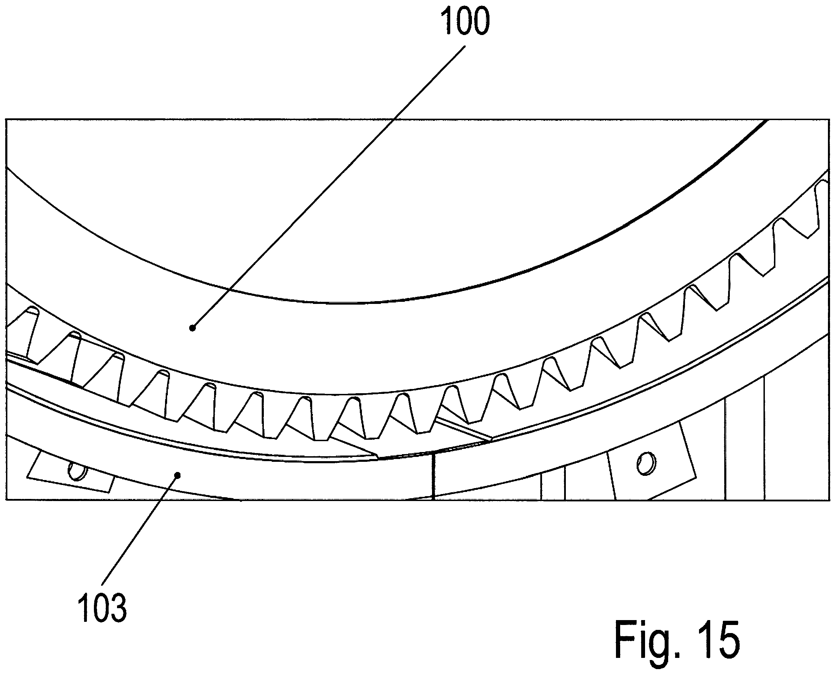

In der Figur 15 ist der erste Ausschnitt der Figur 14 vergrößert gezeigt, wobei ein zweiter Ausschnitt gekennzeichnet ist.

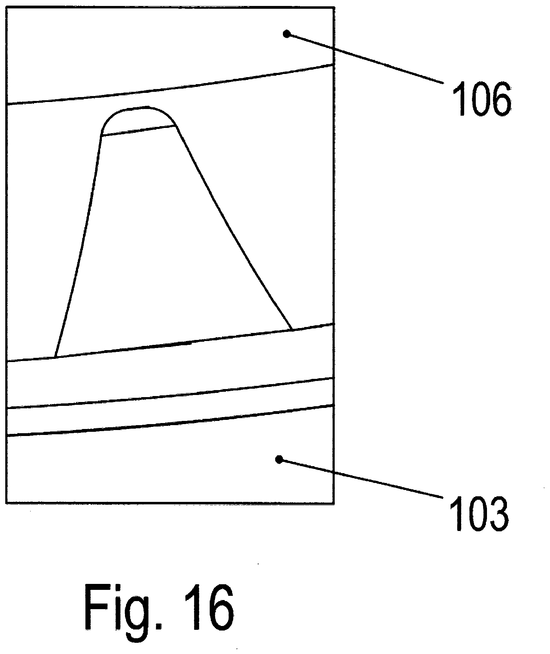

In der Figur 16 ist der zweite Ausschnitt der Figur 15 vergrößert gezeigt.
In der Figur 17 ist das Gehäuse des Getriebes in Längsrichtung angeschnitten dargestellt, so dass die Krümmung der Dachwandung, insbesondere der bogenförmige Verlauf in Längsrichtung, sichtbar ist.
In der Figur 18 ist das Gehäuse des Getriebes in Querrichtung angeschnitten dargestellt, so dass die Krümmung der Deckenwandung 171, insbesondere der bogenförmige Verlauf in Querrichtung, sichtbar ist.
In der Figur 19 ist eine als Ölleitrippenstruktur 210 ausgeführte rhombusartige Ölleitstruktur dargestellt, wobei die Ölleitrippenstruktur 210 an der Innenseite der Deckenwandung 171 ausgeformt oder angeordnet ist.
In der Figur 20 ist die Ölleitrippenstruktur 210 und ein das Öl zur Ölleitrippenstruktur 210 heraufspritzendes Zahnrad 10 gezeigt.
In der Figur 21 ist die Ölleitrippenstruktur 210 separat dargestellt.

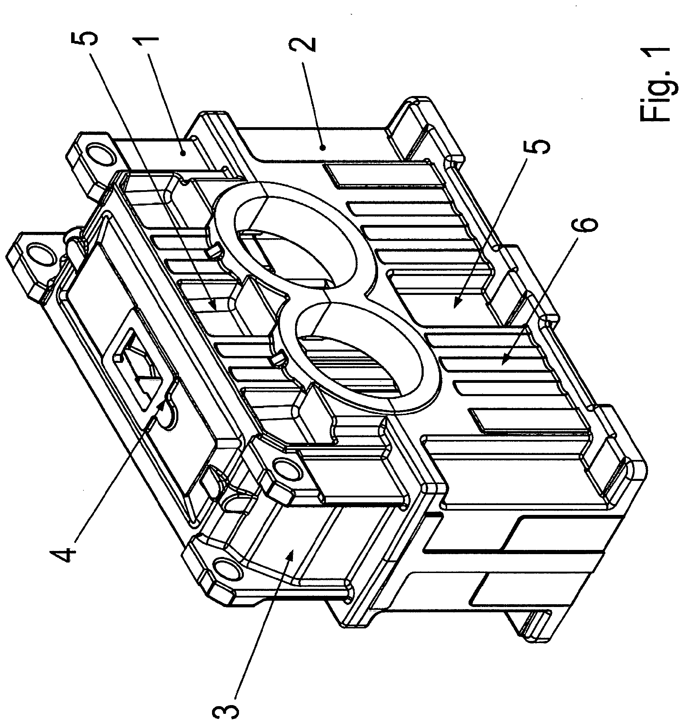

Wie in Figur 1 gezeigt, ist das Gehäuseunterteil 2 unter dem Gehäuseoberteil 1 angeordnet. In vertikaler Richtung ist also das Gehäuseoberteil 1 oberhalb des Gehäuseunterteils 2 angeordnet.

Das Gehäuseoberteil 1 weist einen rahmenartigen Tragabschnitt auf, welcher den wesentlichen Teil der Kräfte aufnimmt und durchleitet. Die restlichen Abschnitte des Gehäuseoberteils 1 sind nur zum öldichten Einhausen des Getriebeinneren ausgebildet, also mit dünnerer Wandstärke ausgebildet als der Tragabschnitt, und schmiegen sich an den Tragabschnitt an.

Somit ist das Gehäuseoberteil 1 und auch das Gehäuseunterteil 2 schalenartig ausgeformt.

Der rahmenartige Tragabschnitt des Gehäuseoberteils 1 weist eine erste Querrippe 62 auf. Diese erstreckt sich hauptsächlich in horizontaler Richtung.

Zwei erste Rippen 61 sind voneinander beabstandet und sind jeweils mit der ersten Querrippe 61 verbunden, insbesondere an zwei voneinander beabstandeten Stellen.

Die ersten Rippen 61 erstrecken sich hauptsächlich in vertikaler Richtung, sind also in vertikaler Richtung weiter ausgedehnt als in jeder hierzu transversalen Richtung.

Der rahmenartige Tragabschnitt des Gehäuseoberteils 1 weist auch eine zweite Querrippe 62 auf. Diese erstreckt sich hauptsächlich in horizontaler Richtung.

Zwei zweite Rippen 61 sind voneinander beabstandet und sind jeweils mit der zweiten Querrippe 61 verbunden, insbesondere an zwei voneinander beabstandeten Stellen.

Die zweiten Rippen 61 erstrecken sich hauptsächlich in vertikaler Richtung, sind also in vertikaler Richtung weiter ausgedehnt als in jeder hierzu transversalen Richtung.

Jede erste Rippe 61 und jede zweite Rippe 61 weist an ihrem von der jeweiligen Querrippe abgewandten Endbereich eine Tragöse 63 auf. Somit ist das Getriebe mittels Haken oder Seil aufnehmbar an den Tragösen und einfach transportierbar. Die beim Transport auftretenden Kräfte werden als an den Tragösen 63 in die Endbereiche und somit den rahmenartigen Tragabschnitt eingeleitet. Somit wird das Getriebegehäuse nur unwesentlich verformt und bleibt unbeschädigt.

Eine erste Rippe 61 ist an ihrem Endbereich mit einem Balken 60, insbesondere Tragbalken, verbunden, der an seinem anderen Ende mit dem Endbereich einer zweiten Rippe 61 verbunden ist. Ebenso ist die andere Rippe 61 an ihrem Endbereich mit einem Balken 60, insbesondere Tragbalken, verbunden, der wiederum an seinem anderen Ende mit dem Endbereich der anderen zweiten Rippe 61 verbunden ist. Die beiden Balken 60 sind parallel und voneinander beabstandet angeordnet.

Wie oben beschrieben, sind an dem so aus den Rippen 61, Querrippen 62 und Balken 60 gebildeten rahmenartigen Tragabschnitt des Gehäuseoberteils 1 Wandabschnitte angeschmiegt, so dass das schalenartige Gehäuseoberteil einteilig ausformbar ist, insbesondere als Gussteil.

Hierbei sind also die Wandabschnitte, insbesondere auch zwei Seitenwandabschnitte 3 und der Wandabschnitt mit konkav-konvexer Wellenstruktur an das rahmenartige Tragabschnitt angeformt und angeschmiegt und einstückig ausgebildet.

Die Balken 60 erstrecken sich hauptsächlich in horizontaler Richtung, sind also horizontalweiter ausgedehnt als in jeder hierzu transversalen Richtung.

Die Realisierung des rahmenartigen Tragabschnitts erfolgt also durch eine Aufdickung der Wandstärke.

Zusätzlich sind auch aufgedickte Bereiche am Gehäuseoberteil 1 vorgesehen, welche als Lageraufnahme für zumindest einen Teil, insbesondere die Hälfte, des Umfangs eines Außenrings eines Lagers vorgesehen sind. Diese bogenartig ausgeformten aneinandergrenzenden, aufgedickten Bereiche sind mit den Querrippen 62 verbunden, insbesondere jeweils in demjenigen Endbereich, in welchem die jeweilige Rippe 61 verbunden sind.

Die konkav-konvexe Wellenstruktur der Wandabschnitte vergrößert die Oberfläche und verringert somit den Wärmeübergangswiderstand zur Umgebungsluft. Eine besonders starke Vertiefung ist hierbei als Vertiefung 5 für Betätigungsbereich für Schraubverbindungen vorgesehen. Dabei sind die in den Figuren nicht gezeigten Schrauben Verbindungsschrauben, mit welchen das Gehäuseoberteil 1 und das Gehäuseunterteil 2 schraubverbunden sind.

Das Gehäuseunterteil 2 weist eine Wellenstruktur 6 auf, insbesondere einen konkavkonvexen Wandabschnitt, der ebenfalls oberflächenvergrößernd ist und somit den Wärmeübergangswiderstand vom Getriebeinnenraum, insbesondere Schmieröl, zur Umgebungsluft hin verringert.

Der Gehäusedeckel ist zum Verschließen einer Öffnung des Gehäuseoberteils 1 vorgesehen, welche von dem rahmenförmigen Tragabschnitt umfasst ist, insbesondere mit Abstand. Dies bedeutet, dass der rahmenförmige Tragabschnitt die Öffnung nicht direkt berührt, sondern von der Öffnung beabstandet ist.

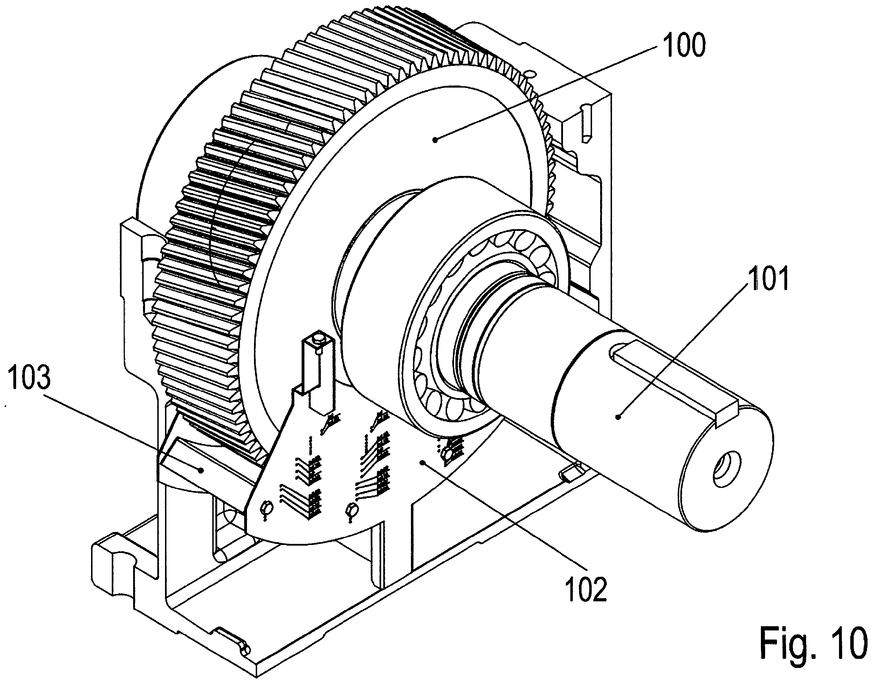

Wie in Figur 10 gezeigt, ist das Zahnrad 100 drehfest mit der Welle 101 verbunden, welche über ein Lager im Gehäuse gelagert ist. Dabei ist das Lager in einer Lageraufnahme des Gehäuses aufgenommen, wobei ein erster Teil der Lageraufnahme im Gehäuseoberteil 1 und ein zweiter Teil der Lageraufnahme im Gehäuseunterteil 2 angeordnet ist.

Der das Zahnrad 100 umgebende untere Raumbereich ist von der Wanne umgeben, wobei die Wanne Seitenwände 102 und eine Bodenplatte 103 aufweist. Sie ist somit aus drei Stücken fertigbar.

Dabei sind die Seitenwände 102 der Wanne an der Bodenplatte 103 befestigt. Die Bodenplatte 103 weist an ihrem tiefsten Bereich eine nach unten gerichtete Ausstülpung 130 auf. Die Ausstülpung 130 ist radial weg vom Zahnrad gerichtet und an ihrem radial äußeren Endbereich offen ausgeführt. Somit gelangt #Schmieröl des Getriebes vom Ölsumpf des Getriebes durch die Ausstülpung 130 bis zum Zahnrad 100. Seitlich, also beidseitig in axialer Richtung, ist die Ausstülpung verschlossen durch einen jeweiligen Laschenabschnitt 120 der Seitenwände 102, so dass ein radial zum Zahnrad 100 durchgehender Kanal gebildet ist.

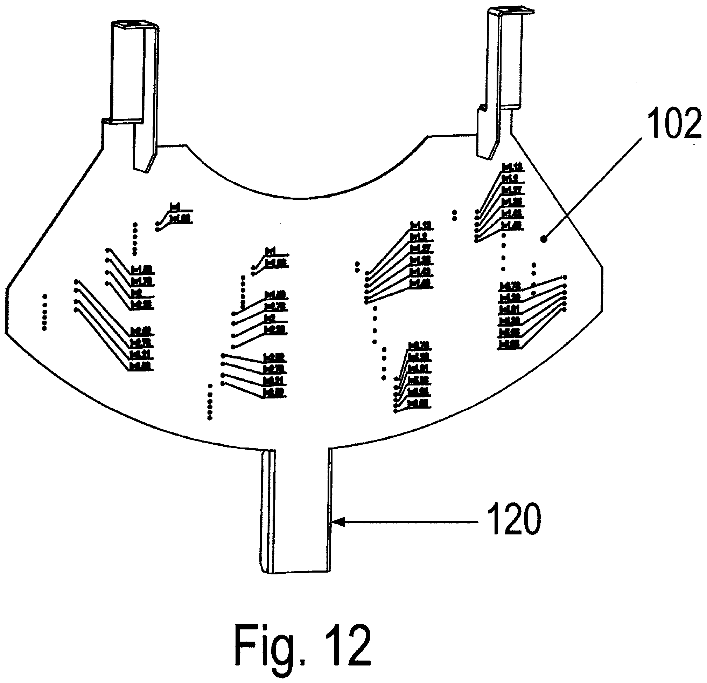

Wie aus Figur 12 ersichtlich, sind die Seitenwände 102 jeweils als Blechteil ausgestanzt und weisen an ihrer axialen Außenseite Kennzeichnungen auf, welche die Positionen einzubringender Bohrlöcher kennzeichnen, insbesondere abhängig von der Übersetzungszahl des Getriebes und/oder Verzahnungsdaten des Zahnrades 100.

Durch die Bohrlöcher hindurch sind Schrauben geführt, welche eine Schraubverbindung zwischen Bodenplatte 103 und jeweiliger Seitenwand 102 ausführbar machen.

Somit ist je nach Größe beziehungsweise anderen Verzahnungsdaten die Bodenplatte auf einem optimalen Radialabstand zur Zahnradmittelachse anordenbar.

Die Bodenplatte 103 ist ebenfalls als Stanz-Biegeteil gefertigt und weist einen U-förmigen Querschnitt auf. Dabei ist sie derart gebogen ausgeführt, dass der Abstand zwischen der Verzahnung, insbesondere den Köpfen der im selben Umfangswinkel wie die Bodenplatte 103 sich befindenden Zähne der Verzahnung des Zahnrades 100 konstant ist. Es ist also ein schmaler Spalt zwischen diesen Zahnköpfen und der Bodenplatte 103 vorgesehen.

Bei Drehbewegung des Zahnrades 100 entsteht somit eine Pumpwirkung, da das in den Zahnlücken sich befindende Schmieröl mit höherer Geschwindigkeit bewegt wird als das Schmieröl im Kanal. Auf diese Weise wird also Schmieröl durch den Kanal vom Ölsumpf zum Zahnrad 100 befördert und von diesem dann mitbewegt

Die Wanne vermindert auch die Plantschverluste bei Bewegung des Zahnrads 100. Denn das Eintauchen der Zähne der Verzahnung des Zahnrads 100 findet in dem von der Wann umgebenen Raumberiech statt.

Die U-förmige gebogene Bodenplatte 103 ist mit Ausnehme der Laschenabschnitte 120 und der Ausstülpung 130 kreisförmig in Umfangsrichtung gebogen, so dass der Abstand zwischen den Zähnen der Verzahnung des Zahnrades 100 und der Bodenplatte 103 im entsprechenden Umfangswinkelbereich im Wesentlichen konstant ist.

Die Laschenabschnitte 120 sind nach radial außen gerichtet, so dass die jeweilige Seitenwand 102 in axialer Richtung an die Bodenplatte 103, insbesondere an deren Laschenabschnitte 120, andrückbar und schraubverbindbar ist.

Mittels der Pumpwirkung des Zahnrades 100 in Zusammenwirkung mit der Wanne wird Öl auf eine höher als der Ölpegel des Ölsumpfes liegende Position gepumpt und von dort über einen Zwischenspeicher oder direkt zu den zu schmierenden Stellen, wie Lager oder im Eingriff stehende Verzahnungen, geführt. Hierzu sind entsprechende Leitungen oder Rohre vorgesehen.

Die Ausstülpung 130 ist mittels Herausbiegen aus der Urform des Bodenplatte 103 herstellbar. Hierzu ist ein Stanzblech derart gebogen, dass zwei kreisabschnittsförmig gebogene Berieche über einen im Wesentlichen rechteckförmig gebogenen Bereich voneinander beabstandet sind. Danach werden die kreisabschnittsförmig gebogenen Beriech aneinander angedrückt und bilden somit den kreisförmigen Bereich der Bodenplatte 103. Dabei umfassen die kreisabschnittsförmig gebogene Berieche eine Ausnehmung. Der rechteckförmig gebogene Bereich weist ebenfalls eine mittig angeordnete Ausnehmung auf und bildet somit die Ausstülpung 130.

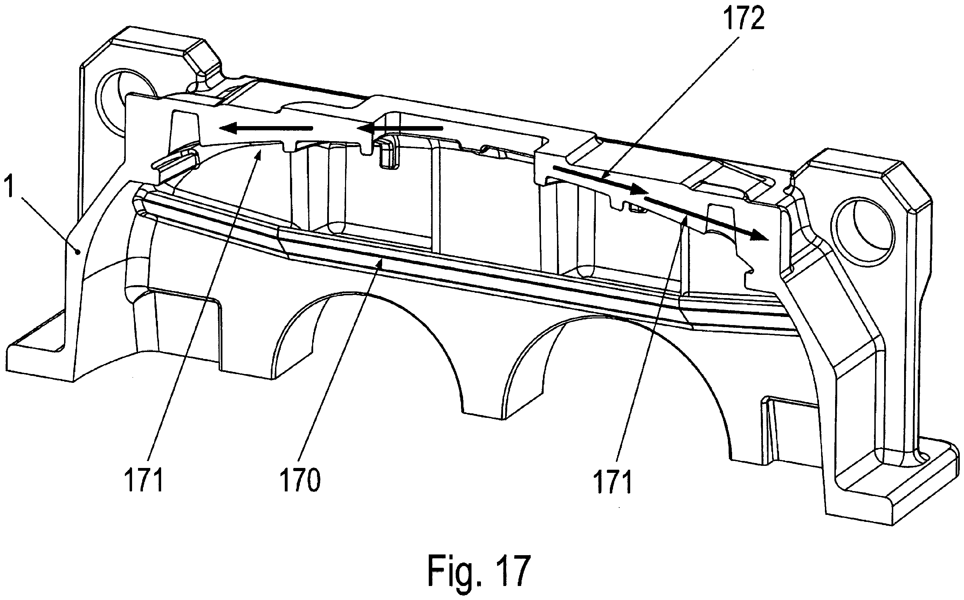

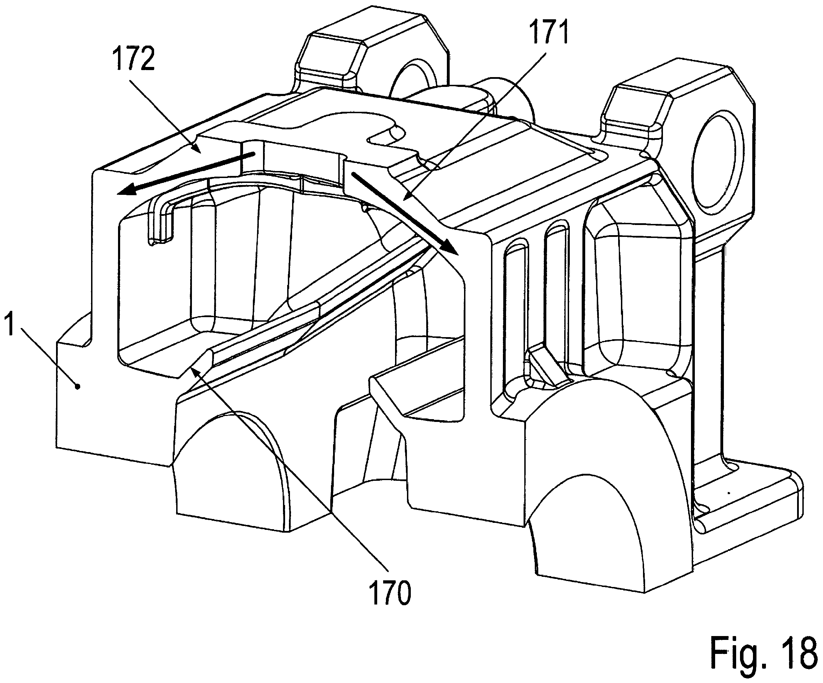

Wie in Figur 17 und 18 ersichtlich ist, ist die Deckenwandung 171 gekrümmt ausgeführt, wobei in Längsrichtung ein anders gekrümmter Verlauf vorhanden ist als in Querrichtung. Dabei ist die Neigung derartig ausgeführt, dass hochspritzende Öltropfen, die beispielsweise von einem Zahnrad 100 des Getriebes an die Decke gespritzt werden, vorzugsweise in Querrichtung entlang der Deckenwand 171 abfließen. Unterhalb der Deckenwand 171, insbesondere unterhalb des in Längsrichtung angeordneten Endbereichs der Deckenwand 171, ist eine Rinne ausgebildet, deren Rinnenwand 170 sich in Längsrichtung erstreckt, also in Längsrichtung weiter erstreckt, als in Querrichtung oder in einer anderen, zur Längsrichtung senkrechten Richtung. Ebenso ist eine weitere Rinne unterhalb des entgegen der Längsrichtung angeordneten Endbereichs der Deckenwand 171 angeordnet.

Somit fließt das hochgespritzte Öl an der Deckenwandung 171 entweder in Längsrichtung oder entgegen der Längsrichtung zum jeweiligen Endbereich der Deckenwandung 171 ab und tropft in die jeweilige Rinne herunter. Von dort wird das Öl zu einem zu schmierenden Lager oder zu einem zu schmierenden Verzahnungsteil geführt.

Die rinne ist am Gehäuseoberteil 1 einstückig, also durch Formgebung des Stahlgussteils, ausgeformt und somit einteilig mit dem Gehäuseoberteil 1 ausgebildet.

Vom höchsten Punkt der konkaven Deckenwandung 171 aus fließt das Öl schneller in Querrichtung ab als in Längsrichtung, weil die Krümmung und Steigung in Querrichtung größer ist.

In Längsrichtung ist die Deckenwandung weiter ausgedehnt als in Querrichtung.

Die Ölflussrichtung 172 an der Deckenwandung 171 ist somit nach außen, also in Längsrichtung beziehungsweise entgegen der Längsrichtung, gerichtet und somit werden die Öltropfen zur Rinne hin befördert.

Somit wird nicht nur durch die Förderwirkung des Zahnrades zusammen mit der Wanne Öl zu einer höheren Position befördert, insbesondere in die Rinne hinein, sondern auch das herumspritzende Öl in die Rinne befördert. Somit steht ausreichend Öl zur Schmierung zur Verfügung.

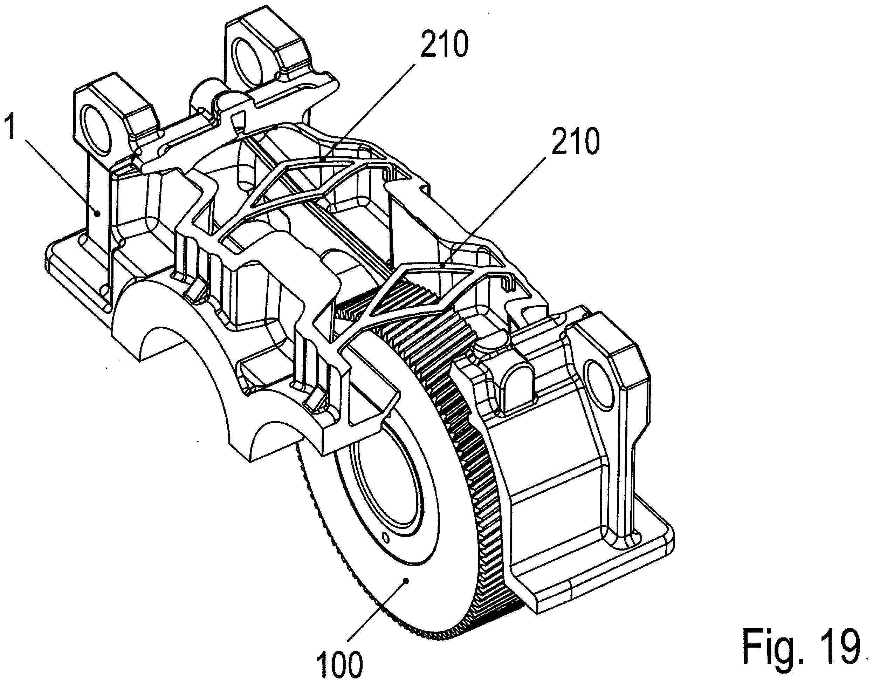

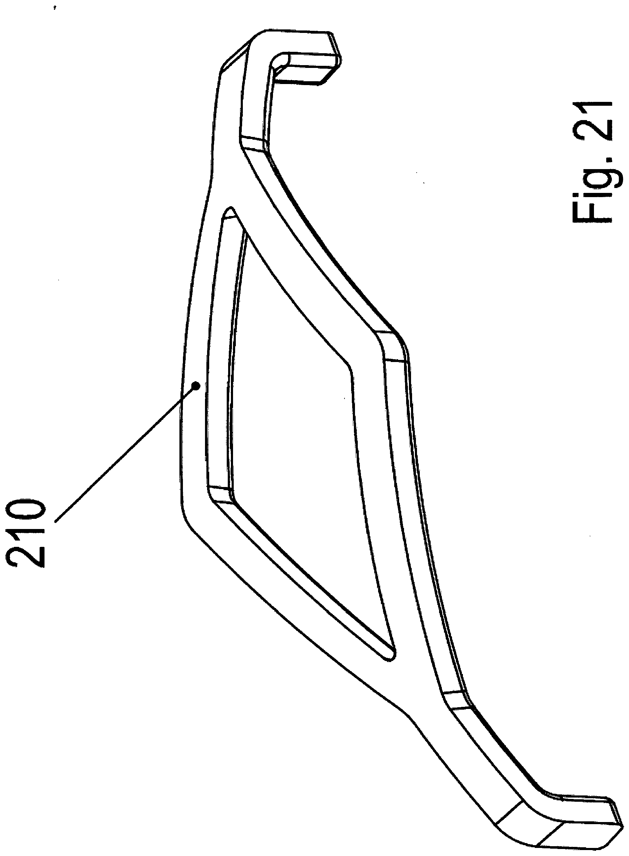

Wie in den Figuren 19 bis 21 dargestellt weist die Deckenwandung 171 eine in den Innenraum hervorragende rhombusartige Struktur auf, welche das von dem Zahnrad 100 heraufgespritzte Öl sammelt und in Querrichtung oder entgegen der Querrichtung zur jeweiligen Rinne hinleitet.

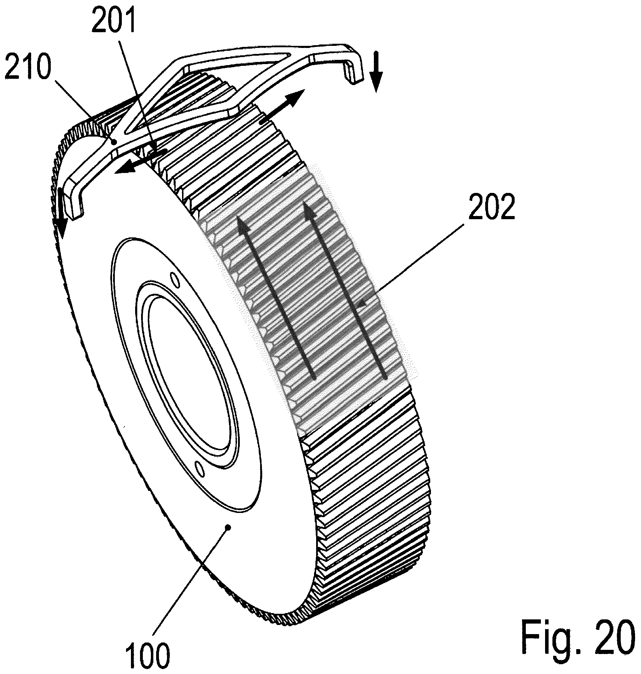

In Figur 20 ist die Ölflussrichtung 201 entlang der Ölleitrippenstruktur 210 gekennzeichnet und die Ölspritzrichtung 202 auch.

Die Ölleitrippenstruktur 210 weist eine rhombusartige Struktur auf, deren zwei benachbarte in Querrichtung weisende Seiten zusammengeführt sind zu einem Sammelrippenabschnitt, welcher das Öl zur Rinne hinführt und/oder einen derartigen Endabschnitt aufweist, dass das Öl abtropft in die Rinne.

Die als Seiten des Rhombus ausgeformten Rippenabschnitte erstrecken sich von dem Bereich verschwindender oder geringer Neigung der Deckenwandung 171 bis hin zu einem Bereich, in welchem der Betrag der Neigung größer ist. Hiervon aus erstreckt sich der Sammelrippenabschnitt bis hin zu einem Bereich, in welchem der Betrag der Neigung noch größer ist.

Wie in Figur 19 gezeigt, ist an der Deckenwandung 171 nicht nur eine einzige, sondern auch eine weitere Ölleitrippenstruktur 210 gezeigt. Diese ist einem weiteren Zahnrad zugeordnet oder derart angeordnet, dass bei Drehrichtungsumkehr des Zahnrades 100 der Bereich der Deckenwandung 171 angespritzt wird, der diese weitere Ölleitrippenstruktur 210 aufweist.

Bei weiteren erfindungsgemäßen Ausführungsbeispielen sind andere Strukturen einsetzbar. Beispielsweise sind nicht nur zwei, sondern mehrere Rippenabschnitte einem Sammelrippenabschnitt zugeführt, so dass die Rippenabschnitte eine fingerartige Struktur bilden.

Die Rippenabschnitte erstrecken sich dabei wiederum von dem Bereich verschwindender oder geringer Neigung der Deckenwandung 171 bis hin zu einem Bereich, in welchem der Betrag der Neigung größer ist. Hiervon aus erstreckt sich wiederum der Sammelrippenabschnitt bis hin zu einem Bereich, in welchem der Betrag der Neigung noch größer ist.

Alternativ ist die Ölleitrippenstruktur 210 auch als separates Teil ausführbar, also nicht als am Gehäuseoberteil 1 in der Gussform ausgeformte zum Innenraum hin hervorragende Erhebung, sondern als an der Deckenwandung 171 des Gehäuseoberteils befestigtes Teil.

Weiter alternativ ist die Ölleitrippenstruktur 210 nicht als Erhebung, sondern als Vertiefung, wie Nut oder dergleichen, in der Deckenwandung 171 des Gehäuseoberteils 1 ausgeführt.

### Bezugszeichenliste

1 Gehäuseoberteil
2 Gehäuseunterteil
3 Seitenwandabschnitt
4 Gehäusedeckel
5 Vertiefung für Betätigungsbereich für Schraubverbindungen
6 Wellenstruktur, insbesondere konkav-konvexer Wandabschnitt
60 Balken
61 Rippe
62 Querrippe
63 Tragösen
90 Ölstand
100 Zahnrad
101 Welle
102 Seitenwand
103 Bodenplatte
120 Laschenabschnitt
130 Ausstülpung
170 Rinnenwand
171 Deckenwandung
172 Ölflussrichtung an der Deckenwandung 171
210 Ölleitrippenstruktur
201 Ölflussrichtung
202 Ölspritzrichtung

## Patentansprüche

1. Getriebe mit Gehäuse,
wobei das Gehäuse ein Gehäuseoberteil (1) und ein Gehäuseunterteil (2) aufweist, zwischen denen eine Ebene angeordnet ist,
wobei auf das Gehäuseunterteil (2) das Gehäuseoberteil (1) aufgesetzt ist, wobei das Gehäuseoberteil (1) auf einer ersten Seite der Ebene und das Gehäuseunterteil (2) auf der anderen Seite der Ebene angeordnet ist,
wobei das Gehäuseoberteil (1) schalenförmig ausgeformt ist,
wobei das Gehäuseoberteil (1) eine den Innenraum des Getriebes zumindest teilweise begrenzende Deckenwandung (171) aufweist,
**dadurch gekennzeichnet, dass**
an der Deckenwandung (171) zumindest eine Ölleitrippenstruktur (210) angeordnet ist, welche als Erhebung oder Vertiefung (5) ausgeformt ist,
und dass ein Rippenabschnitt der jeweiligen Ölleitrippenstruktur (210) von einem Bereich der Deckenwandung mit einem ersten Betrag an Neigung gegen die Ebene zu einem Bereich der Deckenwandung (171) mit einem zweiten Betrag an Neigung gegen die Ebene sich erstreckt, wobei der zweite Betrag größer ist als der erste Betrag.

2. Getriebe nach Anspruch 1,
**dadurch gekennzeichnet, dass**
die jeweilige Ölleitrippenstruktur (210) zwei oder mehr Rippenabschnitte aufweist, die in einen Sammelrippenabschnitt münden.

3. Getriebe nach mindestens einem der vorangegangenen Ansprüche,
**dadurch gekennzeichnet, dass**
das Gehäuseoberteil (1) eine den Innenraum des Getriebes zumindest teilweise begrenzende, derart in Längsrichtung und derart in Querrichtung gekrümmte, Deckenwandung aufweist, dass zur Deckenwandung hochgespritzte Öltröpfchen in oder entgegen der Querrichtung entlang der Deckenwandung abtropfen in eine an der Innenseite des Gehäuseoberteils (1) ausgeformte Rinne,

4. Getriebe nach mindestens einem der vorangegangenen Ansprüche,
**dadurch gekennzeichnet, dass**
das Gehäuseoberteil (1) an seiner Innenseite eine am Gehäuseoberteil (1) ausgeformte Rinne, aufweist,

5. Getriebe nach mindestens einem der vorangegangenen Ansprüche,
**dadurch gekennzeichnet, dass**
der Sammelrippenabschnitt Öl der Rinne zuführt,

6. Getriebe nach mindestens einem der vorangegangenen Ansprüche,
**dadurch gekennzeichnet, dass**
die Deckenwandung mehrere Ölleitstrukturen aufweist.

7. Getriebe nach mindestens einem der vorangegangenen Ansprüche,
**dadurch gekennzeichnet, dass**
die jeweilige Ölleitstruktur als separates Teil gefertigt ist und mit dem Gehäuseoberteil (1) verbunden ist.

8. Getriebe nach mindestens einem der vorangegangenen Ansprüche,
**dadurch gekennzeichnet, dass**
die Querrichtung parallel zur Wellenachse der abtreibenden Welle (101) ausgerichtet ist,

9. Getriebe nach mindestens einem der vorangegangenen Ansprüche,
**dadurch gekennzeichnet, dass**
die Deckenwandung einem Gewölbe entsprechend ausgeformt ist.

10. Getriebe nach mindestens einem der vorangegangenen Ansprüche,
**dadurch gekennzeichnet, dass**
aus der Rinne Schmieröl zu schmierenden Teilen, wie Lager oder Verzahnungsteil, zugeführt wird.

11. Getriebe nach mindestens einem der vorangegangenen Ansprüche,
**dadurch gekennzeichnet, dass**
eine Wanne zur Ölführung und Verminderung von Plantschverlusten einen Umfangsabschnitt eines Verzahnungsteils, insbesondere Zahnrades (100), umgibt,
wobei die Wanne zumindest aus drei Teilen, also zumindest aus einer Bodenplatte (103) und zwei Seitenwänden, zusammengesetzt ist, wobei die Bodenplatte (103) mit den beiden Seitenwänden schraubverbunden ist,
wobei die Wanne am Gehäuse befestigt ist,
wobei die Wanne eine Ausnehmung, aufweist,
wobei Bodenplatte (103) und die Seitenwände Stanz-Biegeteile sind.

12. Getriebe nach mindestens einem der vorangegangenen Ansprüche,
**dadurch gekennzeichnet, dass**
der Abstand, zwischen der Bodenplatte (103) und den Köpfen der Verzahnung im von der Wanne überdeckten Umfangswinkelbereich konstant ist.

13. Getriebe nach mindestens einem der vorangegangenen Ansprüche,
**dadurch gekennzeichnet, dass**
die Bodenplatte (103) in radialer Richtung sich erstreckende Laschenabschnitte (120) aufweist, an welchen die Seitenwände mittels Schraubverbindung schraubverbunden sind.

14. Getriebe nach mindestens einem der vorangegangenen Ansprüche,
**dadurch gekennzeichnet, dass**
eine Seitenwand eine Kennzeichnung aufweist, an der ein Bohrloch zum Durchführen einer Schraube der Schraubverbindung anbringbar ist.

## Claims

1. A transmission with housing,
wherein the housing has an upper housing part (1) and a lower housing part (2) between which a plane is arranged,
wherein the upper housing part (1) is placed on the lower housing part (2), wherein the upper housing part (1) is arranged on a first side of the plane and the lower housing part (2) on the other side of the plane,
wherein the upper housing part (1) is shell-shaped,
wherein the upper housing part (1) has a top wall (171) which at least in part delimits the interior of the transmission,
**characterised in that**
at least one oil-conducting rib structure (210) is arranged on the top wall (171), which structure is formed as an elevation or indentation (5),
and **in that** a rib portion of the respective oil-conducting rib structure (210) extends from a region of the top wall with a first amount of inclination to the plane to a region of the top wall (171) with a second amount of inclination to the plane, the second amount being greater than the first amount.

2. A transmission according to Claim 1,
**characterised in that**
the respective oil-conducting rib structure (210) has two or more rib portions which open into a collecting-rib portion.

3. A transmission according to at least one of the preceding claims,
**characterised in that**
the upper housing part (1) has a top wall which at least in part delimits the interior of the transmission and is curved in the longitudinal direction and in the transverse direction such that oil droplets splashed up to the top wall drip off in or counter to the transverse direction along the top wall into a channel formed on the inner side of the upper housing part (1).

4. A transmission according to at least one of the preceding claims,
**characterised in that**
the upper housing part (1) has on its inner side a channel formed on the upper housing part (1).

5. A transmission according to at least one of the preceding claims,
**characterised in that**
the collecting-rib portion supplies oil to the channel.

6. A transmission according to at least one of the preceding claims,
**characterised in that**
the top wall has a plurality of oil-conducting structures.

7. A transmission according to at least one of the preceding claims,
**characterised in that**
the respective oil-conducting structure is manufactured as a separate part and is connected to the upper housing part (1).

8. A transmission according to at least one of the preceding claims,
**characterised in that**
the transverse direction is oriented parallel to the shaft axis of the output shaft (101).

9. A transmission according to at least one of the preceding claims,
**characterised in that**
the top wall is shaped to correspond to a vault.

10. A transmission according to at least one of the preceding claims,
**characterised in that**
from the channel lubricating oil is supplied to parts which are to be lubricated, such as bearings or toothed parts.

11. A transmission according to at least one of the preceding claims,
**characterised in that**
a pan for carrying oil and reducing churning losses surrounds a peripheral portion of a toothed part, in particular gear wheel (100),
wherein the pan is composed at least of three parts, i.e. at least of a bottom plate (103) and two side walls, wherein the bottom plate (103) is screw-connected to the two side walls,
wherein the pan is fastened to the housing,
wherein the pan has a cutout,
wherein the bottom plate (103) and the side walls are stamped and bent parts.

12. A transmission according to at least one of the preceding claims,
**characterised in that**
the distance between the bottom plate (103) and the tips of the toothing in the angle-at-circumference region covered by the pan is constant.

13. A transmission according to at least one of the preceding claims,
**characterised in that**
the bottom plate (103) has tab portions (120) extending in the radial direction, to which the side walls are screw-connected by means of screw connection.

14. A transmission according to at least one of the preceding claims,
**characterised in that**
a side wall has a marking on which a drill hole for passing a screw of the screw connection through can be formed.

## Revendications

1. Transmission munie d'un carter,
ledit carter comprenant une partie supérieure (1) et une partie inférieure (2) entre lesquelles se trouve un plan,
la partie supérieure (1) du carter étant mise en place sur la partie inférieure (2) dudit carter, ladite partie supérieure (1) du carter et ladite partie inférieure (2) dudit carter étant disposées, respectivement, sur un premier côté du plan et sur l'autre côté dudit plan,
la partie supérieure (1) du carter revêtant la forme d'une coque,
ladite partie supérieure (1) du carter étant munie d'une paroi de recouvrement (171) qui délimite, au moins partiellement, l'espace interne de la transmission,
**caractérisée par le fait**
**qu'**au moins une structure nervurée (210) de canalisation d'huile, implantée sur la paroi de recouvrement (171), se présente comme une proéminence ou comme un renfoncement (5) ;
et par le fait qu'une zone nervurée de la structure nervurée considérée (210) de canalisation d'huile s'étend à partir d'une région de la paroi de recouvrement, avec une première valeur d'inclinaison en direction du plan, vers une région de ladite paroi de recouvrement (171) avec une seconde valeur d'inclinaison en direction dudit plan, ladite seconde valeur étant supérieure à ladite première valeur.

2. Transmission selon la revendication 1,
**caractérisée par le fait que**
la structure nervurée considérée (210) de canalisation d'huile comporte des zones nervurées au nombre de deux ou plus, qui débouchent dans une zone nervurée collectrice.

3. Transmission selon au moins l'une des revendications précédentes,
**caractérisée par le fait que**
la partie supérieure (1) du carter est pourvue d'une paroi de recouvrement qui délimite au moins partiellement l'espace interne de ladite transmission et qui présente, dans la direction longitudinale et dans la direction transversale, une courbure telle que des gouttelettes d'huile, fortement projetées vers ladite paroi de recouvrement, dégouttent le long de ladite paroi de recouvrement, dans la direction transversale ou en sens inverse de cette dernière, dans une rigole ménagée à la face intérieure de ladite partie supérieure (1) du carter.

4. Transmission selon au moins l'une des revendications précédentes,
**caractérisée par le fait que**
la partie supérieure (1) du carter est dotée, à sa face intérieure, d'une rigole pratiquée dans ladite partie supérieure (1) du carter.

5. Transmission selon au moins l'une des revendications précédentes,
**caractérisée par le fait que**
la zone nervurée collectrice délivre de l'huile à la rigole.

6. Transmission selon au moins l'une des revendications précédentes,
**caractérisée par le fait que**
la paroi de recouvrement comprend plusieurs structures de canalisation d'huile.

7. Transmission selon au moins l'une des revendications précédentes,
**caractérisée par le fait que**
la structure considérée de canalisation d'huile est produite en tant que partie distincte, et est reliée à la partie supérieure (1) du carter.

8. Transmission selon au moins l'une des revendications précédentes,
**caractérisée par le fait que**
la direction transversale est orientée parallèlement à l'axe de l'arbre de sortie (101).

9. Transmission selon au moins l'une des revendications précédentes,
**caractérisée par le fait que**
la configuration de la paroi de recouvrement correspond à celle d'une voûte.

10. Transmission selon au moins l'une des revendications précédentes,
**caractérisée par le fait que**
de l'huile lubrifiante provenant de la rigole est délivrée à des parties devant être lubrifiées, telles que des paliers ou des parties dentées.

11. Transmission selon au moins l'une des revendications précédentes,
**caractérisée par le fait**
**qu'**une cuvette, conçue pour guider l'huile et pour diminuer des déperditions par éclaboussures, entoure une région périphérique d'une partie dentée se présentant notamment comme une roue dentée (100),
sachant que ladite cuvette est composée d'au moins trois parties, à savoir d'au moins une plaque de fond (103) et de deux parois latérales, laquelle plaque de fond (103) est reliée aux deux parois latérales par vissage,
la cuvette étant fixée au carter,
ladite cuvette étant pourvue d'un évidement,
ladite plaque de fond (103) et lesdites parois latérales étant des pièces venues d'estampage et de pliage.

12. Transmission selon au moins l'une des revendications précédentes,
**caractérisée par le fait que**
la distance, entre la plaque de fond (103) et les sommets de la denture, est constante dans la plage d'angles circonférentiels couverte par la cuvette.

13. Transmission selon au moins l'une des revendications précédentes,
**caractérisée par le fait que**
la plaque de fond (103) est munie de zones (120) formant languettes, qui s'étendent dans la direction radiale et auxquelles les parois latérales sont reliées par vissage, au moyen d'une solidarisation vissée.

14. Transmission selon au moins l'une des revendications précédentes,
**caractérisée par le fait**
**qu'**une paroi latérale présente un marquage distinctif, au niveau duquel peut être pratiqué un trou foré dévolu au passage d'une vis de la solidarisation vissée.
